# EUROPÄISCHE PATENTSCHRIFT

(11) **EP 0 906 150 B1**
(45) Veröffentlichungstag und Bekanntmachung des Hinweises auf die Patenterteilung: **23.08.2000**
(21) Anmeldenummer: 97924999.2
(22) Anmeldetag: 27.05.1997
(51) Int. Cl.: B01F 17/00, C11D 3/00, B01D 19/04, C10M 145/34, C10M 145/36, C11D 1/722

(54) **BLOCKFÖRMIGE ISO-TRIDECANOLALKOXYLATE ALS SCHAUMARME ODER SCHAUMDÄMPFENDE TENSIDE**
ISO-TRIDECANOLALKOXYLATES IN BLOCK FORM AS LOW-FOAM OR ANTIFOAMING SURFACTANTS
ISO-TRIDECANOLALCOXYLATES SEQUENCES UTILISES COMME TENSIOACTIFS PEU MOUSSANTS OU ANTIMOUSSE

(30) Priorität: 30.05.1996 DE 19621843
(43) Veröffentlichungstag der Anmeldung: 07.04.1999
(73) Patentinhaber: BASF AKTIENGESELLSCHAFT, 67056 Ludwigshafen (DE)
(72) Erfinder: BAUR, Richard, D-67112 Mutterstadt (DE); GÜMBEL, Helmut, D-67814 Dannenfels (DE); BURKHART, Bernd, D-67112 Mutterstadt (DE); AUS DEM KAHMEN, Martin, D-67071 Ludwigshafen (DE); KALUZA, Ulrich, D-69151 Neckargemünd (DE); TAEGER, Klaus, D-67251 Freinsheim (DE)
(86) Internationale Anmeldenummer: EP9702741
(87) Internationale Veröffentlichungsnummer: WO9746311

(56) Entgegenhaltungen:
- EP-A- 0 019 173
- WO-A-92/14808
- DE-A- 2 209 559
- FR-A- 2 641 476
- Ullmanns Encyklopädie der technischen Chemie, 4. Auflage, 1976, Bd.11, S.435, "Oxo-Alkohole"

## Beschreibung

Die vorliegende Erfindung betrifft die Verwendung von blockförmigen iso-Tridecanolalkoxylaten mit einem Ethylenoxid-Block und einem Propylenoxid- oder Butylenoxid-Block als schaumarme oder schaumdämpfende Tenside, insbesondere in Wasch- und Reinigungsmittel-Formulierungen und für chemisch-technische Anwendungen. Die Erfindung betrifft auch ein Verfahren zur Herstellung von Formulierungen, welche diese Tenside enthalten.

Weiterhin betrifft die Erfindung Wasch- und Reinigungsmittel-Formulierungen, welche diese blockförmigen iso-Tridecanolalkoxylate enthalten.

Nichtionische Tenside auf Basis von Alkoxylaten und blockförmigen Alkoxylaten längerkettiger Alkohole natürlichen oder synthetischen Ursprungs sind wesentliche Bestandteile in üblichen Wasch- und Reinigungsmittel-Formulierungen. Auch blockförmige Alkoxylate des iso-Tridecanols sind im Prinzip bekannt.

So wird in der DE-A-22 09 559 (1) ein Addukt von 2 Mol Ethylenoxid und 4 Mol Propylenoxid an iso-Tridecanol als eine Komponente in Mitteln zur Schaumbekämpfung, beispielsweise für den Einsatz in Kunststoffdispersionen und in der Anstrichmittel-, Papier- und Nahrungsmittelindustrie, beschrieben.

Weiterhin empfiehlt die WO-A-92/14808 (2) die Verwendung einer Mischung aus zwei ähnlichen alkoxylierten langkettigen Alkoholen, wobei der langkettige Alkohol jeweils zuerst mit Ethylenoxid und dann mit Propylenoxid umgesetzt worden ist, als schaumdämpfenden Tensidzusatz zu Reinigungsmitteln für maschinell ablaufende Reinigungsprozesse und zu Klarspülmitteln für die maschinelle Geschirreinigung. Als möglicher zugrundeliegender langkettiger Alkohol wird auch iso-Tridecanol genannt. Bei den in (2) offenbarten Blockalkoxlyaten ist der Propoxylierungsgrad immer höher als der Ethoxylierungsgrad, z.B. beschreibt Beispiel 1 von (2) ein Addukt von 3,5 mol Ethylenoxid und 5,5 mol Propylenoxid an einen C₁₃/C₁₅-Oxoalkohol.

Auch Derivate von blockförmigen iso-Tridecanolalkoxylaten sind aus dem Stand der Technik bekannt. So werden in der GB-A-2 196 632 (3) iso-Tridecanolalkoxylate beschrieben, welche einen Propylenoxid-Block, einen Ethylenoxid-Block und eine Phosphorsäureester-Endgruppe tragen. Diese oberflächenaktiven Mittel werden als Netzmittel bei der Vorbehandlung von Textilmaterialien in der textilerzeugenden Industrie empfohlen.

Aus der EP-A-003 183 (4) sind blockförmige Alkoxylate, u.a. auch von iso-Tridecanol, bekannt, welche einen Propylenoxid-Block, einen Ethylenoxid-Block und eine hydrophile Endgruppe wie Sulfat, Sulfonat, Phosphat oder Carboxylat tragen. Diese oberflächenaktiven Mittel werden bei der Erdölgewinnung eingesetzt.

FR-A-2 641 476 offenbart Schaumarme bzw. Schaumdämpfende Mischungen, welche stark verzweigte, mit EO-PO-EO block-alkoxylierte iso-Tridecanole enthalten. EP-A-0 019 173 offenbart Block copolymerisate von C₁₃-Oxoalkohol Äthylenoxid und Propylenoxid als Schaumarme tenside in Wasch- und Reinigungsmitteln.

Die bekannten Tenside auf Basis von Alkoxylaten langkettiger Alkohole im Gebiet Wasch- und Reinigungsmittel und im Gebiet chemisch-technischer Anwendungen weisen jedoch eine Reihe von Nachteilen auf. So sind insbesondere physikalische und anwendungstechnische Eigenschaften wie Oberflächenspannung, Netzvermögen und Schaumverhalten verbesserungsbedürftig. Auch weisen die bekannten Mittel meist ein relativ hohes ökotoxikologisches Gefährdungspotential, insbesondere gegenüber aquatischen Organismen, auf.

Aufgabe der vorliegenden Erfindung war es daher, Tenside für den Wasch- und Reinigungsmittelsektor und für chemisch-technische Anwendungen bereitzustellen, die die geschilderten Nachteile nicht mehr aufweisen.

Demgemäß wurde die Verwendung von blockförmigen iso-Tridecanolalkoxylaten der allgemeinen Formel I 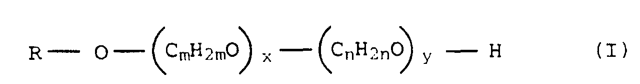 in der
- R: einen iso-Tridecylrest bezeichnet, welcher in seiner Hauptmenge auf primären C₁₃-Alkanolen mit mindestens 3 Verzweigungen basiert,
- m: für die Zahl 2 und gleichzeitig n für die Zahl 3 oder 4 steht oder
- m: für die Zahl 3 oder 4 und gleichzeitig n für die Zahl 2 steht und
- x und y: unabhängig voneinander Zahlen von 1 bis 20 bedeuten,
wobei im Fall m = 2/n = 3 oder 4 die Variable x größer oder gleich y ist,
als schaumarme oder schaumdämpfende Tenside gefunden.

Das als Alkoholkomponente zugrundeliegende iso-Tridecanol (Isotridecylalkohol) ist synthetischen Ursprungs und wird durch Oligomerisierung geeigneter niederer Olefinbausteine und anschließende Oxosynthese (Hydroformylierung) hergestellt. So kann man Isobutylen, 1-Butylen, 2-Butylen oder Gemische hieraus katalytisch trimerisieren, Propylen katalytisch tetramerisieren oder 2-Methyl-1-penten katalytisch dimerisieren. Die so erhältlichen C₁₂-Olefine werden dann zum homologen C₁₃-Alkohol, beispielsweise mittels CO und H₂ an einem geeigneten Katalysator, umgesetzt.

Die Hauptmenge des iso-Tridecanols besteht aus primären C₁₃-Alkanolen mit mindestens 3, insbesondere 4 Verzweigungen (Alkylseitenketten). In der Regel handelt es sich um Tetramethylnonanole, z.B. 2,4,6,8-Tetramethyl-1-nonanol oder 3,4,6,8-Tetramethyl-1-nonanol. Auch Ethyldimethylnonanole wie 5-Ethyl-4,7-dimethyl-1-nonanol können vorliegen.

Als zugrundeliegende Alkoholkomponente kommen jedoch nicht nur reines iso-Tridecanol sondern auch Homologenmischungen aus verzweigten C₁₁- bis C₁₄-Alkanolen, welche iso-Tridecanol als Hauptkomponente enthalten, in Betracht. Solche Homologenmischungen entstehen unter bestimmten Bedingungen bei der oben geschilderten Oligomerisierung niederer Olefinbausteine und anschließenden Oxosynthese. Eine typische Zusammensetzung einer solche Mischung ist die folgende:

| | |
|---|---|
| verzweigtes C₁₁-Alkanol (iso-Undecanol) | 2-15 Gew.-% |
| verzweigtes C₁₂-Alkanol (iso-Dodecanol) | 15-35 Gew.-% |
| iso-Tridecanol | 55-75 Gew.-% |
| verzweigtes C₁₄-Alkanol (iso-Tetradecanol) | 1-10 Gew.-%. |

Von dem in der vorliegenden Erfindung verwendeten iso-Tridecanol sind die "C₁₃/C₁₅-Oxoalkohole" abzugrenzen, welche Gemische aus entsprechenden linearen Olefinen, also α-Dodecen und α-Tetradecen, die hydroformyliert worden sind, darstellen. Die so erhaltenen C₁₃- und C₁₅-Alkanole sind linear oder weisen maximal eine Verzweigung auf.

Die Alkoxylierungsgrade x und y, welche in der Regel Durchschnittswerte darstellen, da meist eine statistische Verteilung der Alkylenoxid-Einheiten mit einem Häufigkeitsmaximum vorliegt, bedeuten vorzugsweise unabhängig voneinander Zahlen von 1,5 bis 12. Durch spezielle Alkoxylierungskatalysatoren, z.B. modifizierte Bentonite oder Hydrotalkite, wie sie in der WO-A-95/04024 beschrieben sind, kann die statistische Verteilung stark eingeengt werden, so daß man "narrow range-Alkoxylate" erhält.

Die beschriebenen blockförmigen iso-Tridecanolalkoxylate I sind entweder Ethylenoxid-Propylenoxid bzw. Butylenoxid-Addukte der Formel Ia 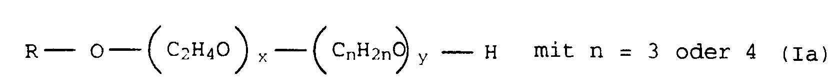 oder Propylenoxid bzw. Butylenoxid-Ethylenoxid-Addukte der Formel Ib

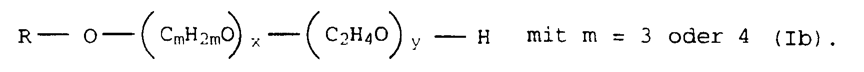

Steht m oder n für die Zahl 3 oder 4, wird die Zahl 3 (Propylenoxid-Block) bevorzugt.

Das Verhältnis der Variablen x und y, welches mit für die Balance zwischen hydrophilen und hydrophoben Molekülteilen ausschlaggebend ist, ist bei den Addukten Ia größer oder gleich 1, vorzugsweise beträgt das Verhältnis von x zu y 1:1 bis 4:1, insbesondere 1,5:1 bis 3:1.

Das Verhältnis der Variablen x und y ist bei den Addukten Ib etwas weniger kritisch und beträgt in der Regel 1:3 bis 3:1, vorzugsweise 1:1,5 bis 3:1.

Die beschriebenen blockförmigen iso-Tridecanolalkoxylate I werden als nichtionische Tenside vorzugsweise in Wasch- und Reinigungsmittel-Formulierungen und in tensidhaltigen Formulierungen für chemisch-technische Anwendungen eingesetzt, beispielsweise für Reinigungsprozesse in Technik und Haushalt wie für die Textilwäsche oder für Reinigungsprozesse im Nahrungsmittelbereich wie die Reinigung von Getränkeflaschen oder von Behältern oder Anlagen in der nahrungsmittelverarbeitenden Industrie oder in Geschirreinigungsmitteln. Insbesondere ist hier die Reinigung harter Oberflächen aus beispielsweise Glas, Keramik, Lack, Kunststoff oder Metall von Interesse. Die Tenside I finden weiterhin Anwendung in technischen Reinigern und in Reinigungsprozessen in der metallverarbeitenden Industrie.

Gegenstand der Erfindung ist auch ein Verfahren zur Herstellung von Formulierungen gemäß Anspruch 12.

Die Tenside I können auch mit Vorteil für eine Vielzahl anderer chemisch-technischer Prozesse eingesetzt werden, so generell in der metallverarbeitenden Industrie, beispielsweise in
- Kühlschmierstoffen,
- Härteölen,
- Hydraulikölemulsionen,
- Polierpasten,
- Formtrennmitteln,
- Ziehölen,
- Beizmitteln,
- Metallreinigern,
- Metalltrocknern.

Hierbei können die Tenside I speziell in den Prozessen mit Vorteil eingesetzt werden, in denen es auf eine hohe thermische Stabilität ankommt.

Weiterhin können die Tenside I bei der Herstellung und Verarbeitung von Textilien eingesetzt werden. Die Anwendung von Tensiden bei der Herstellung und Verarbeitung von Textilien ist außerordentlich vielseitig, sie erstreckt sich hauptsächlich auf die Gebiete
- Vorbehandlungsmittel von Fasern,
- Herstellung von Reyon-Fasern,
- Spinnpräparationen und Textilschmälzen,
- Färbehilfsmittel,
- Avivagen,
- Hydrophobiermittel,
- Hilfsmittel für den Druck,
- Antistatika,
- Beflockungs- und Beschichtungsmittel.

Weiterhin können die Tenside I in der Leder-, Papier-, Druck-, Galvano- und Photoindustrie verwendet werden. Wichtige Anwendungsgebiete hierbei sind Lacke, Pigmente und Druckfarben. Eingesetzt werden Tenside in diesen Anwendungsgebieten sowohl in wäßrigen als auch in nichtwäßrigen Systemen. In nichtwäßrigen Systemen dienen sie vor allem als Dispergierhilfsmittel, Antiabsetzmittel oder Verlaufhilfsmittel. Zudem ermöglichen Tenside die Herstellung von sogenannten High-Solids-Systemen. Einen größeren Anteil haben Tenside in wäßrigen Systemen, in denen sie neben der Stabilisierung der durch Emulsionspolymerisation oder -polykondensation hergestellten Bindemittel auf Kunststoffdispersionsbasis auch als Dispergierhilfsmittel oftmals eingesetzter organischer und anorganischer Pigmente dienen. Daneben verbessern sie die Hafteigenschaften dieser Anstrichmittel.

Weiterhin können die Tenside I bei der Wasserbehandlung, beispielsweise bei der Abwasserreinigung, verwendet werden.

Weiterhin können die Tenside I in Pflanzenschutz-Formulierungen eingesetzt werden.

Weiterhin können die Verbindungen I als Tenside oder Emulgatoren in der kunststoffherstellenden und kunststoffverarbeitenden Industrie verwendet werden. Hauptanwendungsgebiete bei der Kunststoffherstellung und -verarbeitung sind
- Herstellung von Kunststoffdispersionen,
- Herstellung von Perlpolymerisaten,
- Herstellung von Schaumstoffen,
- Verwendung von grenzflächenaktiven Formtrennmitteln,
- Herstellung von Mikrokapseln,
- Verbesserung der Adhäsion zwischen Füll- und Kunststoffen,
- Zusätze zu Kunststoffdispersionen zur Erzielung besonderer Effekte wie Verschäumbarkeit, Füllstoffverträglichkeit oder Netzvermögen,
- Emulgatoren für nichtwäßrige Systeme,
- Anfärben von Kunststoffen,
- Antistatische Ausrüstung von Kunststoffen,
- Klebstoffe.

Gegenstand der vorliegenden Erfindung sind ebenfalls Wasch- und Reinigungsmittel-Formulierungen, welche neben den üblichen Bestandteilen als Tenside 0,1 bis 40 Gew.-%, insbesondere 5 bis 30 Gew.-%, vor allem 10 bis 25 Gew.-%, bezogen auf die Gesamtmenge der Formulierung, mindestens eines blockförmigen iso-Tridecanolalkoxylates I enthalten. Daneben können diese Formulierungen noch weitere nichtionische Tenside, aber auch kationische, anionische und/oder amphotere Tenside enthalten. Die üblichen Bestandteile von Wasch- und Reinigungsmittel-Formulierungen sind dem Fachmann bekannt und brauchen deshalb hier nicht weiter erörtert werden.

Die beschriebenen blockförmigen iso-Tridecanolalkoxylate I zeigen meist eine ungewöhnlich niedrige Grenzflächenspannung, vor allem gegen unpolare Öle wie Motorenöle (bei Anwendung in technischen Reinigern von Bedeutung) oder fette Öle wie Olivenöl (bei Anwendung in Handgeschirreinigungsmitteln von Bedeutung), was sehr gut mit einem hohen Fettablösevermögen korreliert, eine wirksame Erniedrigung der Oberflächenspannung bewirkt sowie eine sehr niedrige kritische Micellbildungskonzentration zur Folge hat. Sie zeigen in der Regel ein gutes Benetzungsvermögen harter Oberflächen und ein sehr gutes Netzvermögen auf textilen Oberflächen. Sie erzeugen beim Waschvorgang meist wenig Schaum, was sie für Textilwaschmittel, insbesondere Pulverwaschmittel, geeignet macht. Sie erzeugen auch in maschinellen und manuellen Reinigungsprozessen in der Regel nur wenig Schaum, wirken meist schaumdämpfend und bewirken meist einen raschen Schaumzerfall.

Die beschriebenen blockförmigen iso-Tridecanolalkoxylate I sind leicht biologisch abbaubar und toxikologisch weitgehend unbedenklich, insbesondere ist ihre aquatische Toxizität wesentlich geringer als bei vergleichbaren marktüblichen Produkten.

### Beispiele

Folgende blockförmige iso-Tridecanolalkoxylate wurden hergestellt und auf ihre anwendungstechnischen Eigenschaften untersucht:

| iso-Tridecyl-O-(C₂H₄O)ₓ-(C₃H₆O)_{y}-H (Beispiele Nr. 1 - 12) | | | | | |
|---|---|---|---|---|---|
| Beispiel Nr. | x | y | Trübungspunkt (Tp) [°C] | Oberflächenspannung [mN/m] | Schaumdämpfungsverhalten [U/min] |
| 1 | 6,0 | 3,0 | 46,5 | 28,3 | 79 |
| 2 | 6,3 | 3,1 | 47,0 | 29,1 | 71 |
| 3 | 6,0 | 4,0 | 42,0 | 29,3 | 72 |
| 4 | 4,0 | 3,0 | 38,5 | 28,9 | 73 |
| 5 | 4,0 | 4,0 | 35,0 | 29,4 | 74 |
| 6 | 5,0 | 4,0 | 38,5 | 29,3 | 72 |
| 7 | 5,0 | 3,0 | 42,0 | 29,0 | 68 |
| 8 | 9,0 | 3,0 | 54,0 | 28,5 | 64 |
| 9 | 12,0 | 3,0 | 60,5 | 30,7 | 33 |
| 10 | 6,0 | 4,5 | 40,0 | 28,9 | 75 |
| 11 | 9,0 | 4,5 | 48,0 | 28,9 | 80 |
| 12 | 12,0 | 4,5 | 54,0 | 30,3 | 65 |

| iso-Tridecyl-O-(C₃H₆O)ₓ-(C₂H₄O)_{y}-H (Beispiele Nr. 13-19) | | | | | |
|---|---|---|---|---|---|
| Beispiel Nr. | x | y | Trübungspunkt (Tp) [°C] | Oberflächenspannung [mN/m] | Schaumdämpfungsverhalten [U/min] |
| 13 | 4,0 | 1,7 | 35,0 | 28,7 | 108 |
| 14 | 4,5 | 1,5 | 30,5 | 28,6 | 107 |
| 15 | 4,5 | 3,0 | 45,5 | 28,5 | 92 |
| 16 | 4,5 | 4,5 | 54,5 | 28,7 | 63 |
| 17 | 3,0 | 1,5 | 29,0 | 27,3 | 106 |
| 18 | 3,0 | 3,0 | 45,5 | 27,8 | 93 |
| 19 | 3,0 | 4,5 | 56,5 | 27,9 | 59 |

Der Trübungspunkt wurde nach DIN 53 917 in Butyldiglykol bestimmt. Dabei wurde die Temperatur ermittelt, oberhalb derer sich die Lösung trübt und somit als Mischung zweier flüssiger Phasen vorliegt. Je niedriger die Trübungstemperatur, desto geringer ist das Schaumvermögen.

Die Oberflächenspannung wurde nach DIN 53 924 bestimmt, indem die Kraft in mN/m gemessen wurde, welche notwendig ist, um eine Platte oder einen horizontal aufgehängten Ring aus der Flüssigkeitsoberfläche herauszuziehen.

Das Schaumdämpfungsverhalten in der Geschirrspülmaschine wurde durch den sogenannten "Ei-Test" geprüft. Hierbei wird durch magnetische Induktionsmessung in einem handelsüblichen Haushalts-Geschirrspülautomaten mit Hilfe eines Zählwerks die Zahl der Umdrehungen eines Sprüharms bestimmt. Durch Schaumbildung, die besonders bei Anwesenheit von Proteinen (Eiweiß) auftritt, wird die Umdrehungszahl des Sprüharms vermindert. Die Umdrehungszahl stellt somit wegen der verringerten Rückstoßkraft ein Maß für die Tauglichkeit von Tensiden in Reinigungsgeräten mit hoher Mechanik dar. Zur Durchführung der Prüfung des Schaumdämpfungsverhaltens wird der Spülflotte ein Ei zugesetzt. Die Testzeit beträgt 12 min, wobei die durchschnittliche Umdrehungszahl pro Minute aus der Gesamtumdrehungszahl berechnet wird. Der Waschvorgang wird bei Raumtemperatur begonnen, nach etwa 10 min beträgt die Temperatur des Spülwassers 60°C.

Der in den Beispielen 1 bis 19 verwendete iso-Tridecyl-Rest steht für das Isomerengemisch verzweigter C₁₃-Alkanole, welches bei der Trimerisierung eines Gemisches von 1-Butylen und 2-Butylen und nachfolgender Hydroformylierung entsteht.

Die Substanzen der Beispiele 1 bis 19 wurden nach folgenden Vorschriften hergestellt:

### Beispiel 1

In einem Autoklaven wurden 200 g iso-Tridecanol (entsprechend 1,0 mol) zusammen mit 0,2 g Kaliumhydroxid als Alkoxylierungskatalysator vorgelegt. Bei 110 bis 120°C wurden kontinuierlich 264 g Ethylenoxid (entsprechend 6,0 mol) eingegast. Zur Vervollständigung der Umsetzung wurde 1 h bei derselben Temperatur nachgerührt. Dann wurden bei 130 bis 140°C kontinuierlich 174 g Propylenoxid (entsprechend 3,0 mol) zugegeben. Anschließend ließ man 2 h bei dieser Temperatur nachreagieren. Man erhielt 638 g der Substanz des Beispiels 1. - Die Substanzen der Beispiele 2 bis 12 wurden analog hierzu hergestellt.

### Beispiel 13

In einem Autoklaven wurden 200 g iso-Tridecanol (entsprechend 1,0 mol) zusammen mit 0,2 g Kaliumhydroxid als Alkoxylierungskatalysator vorgelegt. Bei 130 bis 140°C wurden kontinuierlich 232 g Propylenoxid (entsprechend 4,0 mol) eingegast. Zur Vervollständigung der Umsetzung wurde 1 h bei derselben Temperatur nachgerührt. Dann wurden bei 110 bis 120°C kontinuierlich 75 g Ethylenoxid (entsprechend 1,7 mol) zugegeben. Anschließend ließ man 2 h bei dieser Temperatur nachreagieren. Man erhielt 507 g der Substanz des Beispiels 13. - Die Substanzen der Beispiele 14 bis 19 wurden analog hierzu hergestellt.

## Patentansprüche

1. Verwendung von blockförmigen iso-Tridecanolalkoxylaten der allgemeinen Formel I 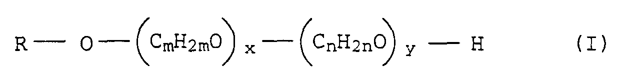 in der
R einen iso-Tridecylrest bezeichnet, welcher in seiner Hauptmenge auf primären C₁₃-Alkanolen mit mindestens 3 Verzweigungen basiert,
m für die Zahl 2 und gleichzeitig n für die Zahl 3 oder 4 steht oder
m für die Zahl 3 oder 4 und gleichzeitig n für die Zahl 2 steht und
x und y unabhängig voneinander Zahlen von 1 bis 20 bedeuten,
wobei im Fall m = 2/n = 3 oder 4 die Variable x größer oder gleich y ist,
als schaumarme oder schaumdämpfende Tenside.

2. Verwendung von blockförmigen iso-Tridecanolalkoxylaten I nach Anspruch 1 als Tenside in Wasch- und Reinigungsmittel-Formulierungen.

3. Verwendung von blockförmigen iso-Tridecanolalkoxylaten I nach Anspruch 1 als Tenside in der metallverarbeitenden Industrie.

4. Verwendung von blockförmigen iso-Tridecanolalkoxylaten I nach Anspruch 1 als Tenside bei der Herstellung und Verarbeitung von Textilien.

5. Verwendung von blockförmigen iso-Tridecanolalkoxylaten I nach Anspruch 1 als Tenside in der Leder-, Papier-, Druck-, Galvano- und Photoindustrie.

6. Verwendung von blockförmigen iso-Tridecanolalkoxylaten I nach Anspruch 1 als Tenside bei der Wasserbehandlung.

7. Verwendung von blockförmigen iso-Tridecanolalkoxylaten I nach Anspruch 1 als Tenside in Pflanzenschutz-Formulierungen.

8. Verwendung von blockförmigen iso-Tridecanolalkoxylaten I nach Anspruch 1 als Tenside oder Emulgatoren in der kunststoffherstellenden und kunststoffverarbeitenden Industrie.

9. Verwendung von blockförmigen iso-Tridecanolalkoxylaten I nach den Ansprüchen 1 bis 8, bei denen x und y unabhängig voneinander Zahlen von 1,5 bis 12 bedeuten.

10. Verwendung von blockförmigen iso-Tridecanolalkoxylaten I nach den Ansprüchen 1 bis 9, bei denen im Fall m = 2/n = 3 oder 4 die Variablen x und y im Verhältnis von 1:1 bis 4:1 stehen.

11. Verwendung von blockförmigen iso-Tridecanolalkoxylaten I nach den Ansprüchen 1 bis 9, bei denen im Fall m = 3 oder 4/n = 2 die Variablen x und y im Verhältnis von 1:3 bis 3:1 stehen.

12. Verfahren zur Herstellung von schaumarmen oder schaumdämpfenden tensidhaltigen Formulierungen, insbesondere von tensidhaltigen Wasch- und Reinigungsmittel-Formulierungen und tensidhaltigen Formulierungen für chemisch-technische Anwendungen, dadurch gekennzeichnet, daß man diesen Formulierungen als Tenside mindestens ein wie in den Ansprüchen 1, 9, 10 oder 11 definiertes blockförmiges iso-Tridecanolalkoxylat I.

13. Wasch- und Reinigungsmittel-Formulierungen, enthaltend neben den üblichen Bestandteilen als Tenside 0,1 bis 40 Gew.-%, bezogen auf die Gesamtmenge der Formulierung, mindestens eines wie in den Ansprüchen 1, 9, 10 oder 11 definierten blockförmigen iso-Tridecanolalkoxylates I.

## Claims

1. The use of isotridecanol block alkoxylates of the general formula I 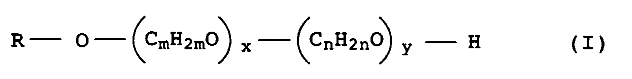 where
R is an isotridecyl radical the bulk of which is based on primary C₁₃ alkanols having at least 3 branches,
m is 2 when n is 3 or 4, or
m is 3 or 4 when n is 2, and
x and y are independently of each other from 1 to 20,
subject to the proviso that x is not less than y when m = 2/n = 3 or 4,
as low-foam or foam-suppressing surfactant.

2. A use as claimed in claim 1 of isotridecanol block alkoxylates I as surfactants in detergent and cleaner formulations.

3. A use as claimed in claim 1 of isotridecanol block alkoxylates I as surfactants in the metal-processing industry.

4. A use as claimed in claim 1 of isotridecanol block alkoxylates I as surfactants in the making and processing of textiles.

5. A use as claimed in claim 1 of isotridecanol block alkoxylates I as surfactants in the leather, paper, printing, electroplating and photographic industries.

6. A use as claimed in claim 1 of isotridecanol block alkoxylates I as surfactants in water treatment.

7. A use as claimed in claim 1 of isotridecanol block alkoxylates I as surfactants in crop protection formulations.

8. A use as claimed in claim 1 of isotridecanol block alkoxylates I as surfactants or emulsifiers in the plastics-making and plastics-processing industry.

9. A use as claimed in any of claims 1 to 8 of isotridecanol block alkoxylates I in which x and y are independently of each other from 1.5 to 12.

10. A use as claimed in any of claims 1 to 9 of isotridecanol block alkoxylates I in which x and y are in a ratio of from I:1 to 4:1 when m = 2 and n = 3 or 4.

11. A use as claimed in any of claims 1 to 9 of isotridecanol block alkoxylates I in which x and y are in a ratio of from 1:3 to 3:1 when m = 3 or 4 and n = 2.

12. A process for producing low-foam or foam-suppressing surfactant-including formulations, especially of surfactant-including detergent and cleaner formulations and surfactant-including formulations for chemical-technical applications, which comprises admixing these formulations with at least one isotridecanol block alkoxylate I as defined in claim 1, 9, 10 or 11 as surfactant.

13. Detergent and cleaner formulation comprising from 0.1 to 40 % by weight, based on the total amount of the formulation, of at least one isotridecanol block alkoxylate I as defined in claim 1, 9, 10 or 11 as surfactant as well as customary constituents.

## Revendications

1. Utilisation d'iso-tridécanolalcooxylates séquencés de formule générale I 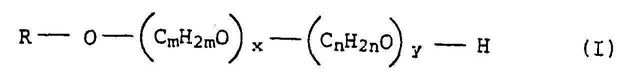 dans laquelle
R représente un reste iso-tridécyle, dont la quantité principale est basée sur des alcanols primaires en C₁₃ ayant au moins trois ramifications,
m représente le nombre 2 et n représente dans le même temps le nombre 3 ou 4, ou bien
m représente le nombre 3 ou 4 et n représente dans le même temps le nombre 2, et
x et y représentent indépendamment l'un de l'autre des nombres de 1 à 20
où lorsque m = 2/n = 3 ou 4, la variable x est supérieure ou égale à y,
en tant qu'agents tensio-actifs moussants peu ou anti-mousse.

2. Utilisation d'iso-tridécanolalcooxylates I séquencés selon la revendication 1, en tant qu'agents tensio-actifs dans des formulations d'agents de lavage et de nettoyage.

3. Utilisation d'iso-tridécanolalcooxylates I séquencés selon la revendication 1, en tant qu'agents tensio-actifs dans l'industrie de transformation du métal.

4. Utilisation d'iso-tridécanolalcooxylates I séquencés selon la revendication 1, en tant qu'agents tensio-actifs lors de la fabrication et de la transformation de textiles.

5. Utilisation d'iso-tridécanolalcooxylates I séquencés selon la revendication 1, en tant qu'agents tensio-actifs dans l'industrie du cuir, du papier, de l'imprimerie, de la galvano et de la photo.

6. Utilisation d'iso-tridécanolalcooxylates I séquencés selon la revendication 1, en tant qu'agents tensio-actifs lors du traitement de l'eau.

7. Utilisation d'iso-tridécanolalcooxylates I séquencés selon la revendication 1, en tant qu'agents tensio-actifs dans les formulations d'agents phytosanitaires.

8. Utilisation d'iso-tridécanolalcooxylates I séquencés selon la revendication 1, en tant qu'agents tensio-actifs ou qu'émulsifiants dans l'industrie de la fabrication et de la transformation des matières synthétiques.

9. Utilisation d'iso-tridécanolalcooxylates I séquencés selon l'une quelconque des revendications 1 à 8, pour lesquels x et y représentent indépendamment l'un de l'autre des nombres de 1,5 à 12.

10. Utilisation d'iso-tridécanolalcooxylates I séquencés selon l'une quelconque des revendications 1 à 9, pour lesquels lorsque m = 2/n = 3 ou 4, les variables x et y sont dans un rapport de 1:1 à 4:1.

11. Utilisation d'iso-tridécanolalcooxylates I séquencés selon l'une quelconque des revendications 1 à 9, pour lesquels lorsque m = 3 ou 4/n = 2, les variables x et y sont dans un rapport de 1:3 à 3:1.

12. Procédé de préparation de formulations contenant des agents tensio-actifs moussants peu ou anti-mousse, en particulier de formulations d'agents de lavage et de nettoyage contenant des agents tensio-actifs et de formulations contenant des agents tensio-actifs pour des applications chimico-techiques, caractérisé en ce que l'on ajoute à ces formulations, en tant qu'agents tensio-actifs, au moins un iso-tridécanolalcooxylate I séquencé tel que défini dans les revendications 1, 9, 10 ou 11.

13. Formulations d'agents de lavage et de nettoyage, contenant en plus des constituants habituels, 0,1 à 40% en poids, par rapport à la quantité totale de la formulation, d'au moins un iso-tridécanolalcooxylate I séquencé tel que défini dans les revendications 1, 9, 10 ou 11, en tant qu'agent tensio-actif.
